(19) Europäisches Patentamt / European Patent Office / Office européen des brevets

(11) **EP 1 802 093 A1**

(12) **DEMANDE DE BREVET EUROPEEN**

(43) Date de publication:
**27.06.2007  Bulletin 2007/26**

(51) Int Cl.:
*H04N 1/32* (2006.01)

(21) Numéro de dépôt: **05292811.6**

(22) Date de dépôt: **26.12.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(71) Demandeur: **Axalto SA**
**92120 Montrouge (FR)**

(72) Inventeurs:
• **Ros, Frédéric**
**92120 Montrouge (FR)**

• **Borla, Jérome**
**92120 Montrouge (FR)**
• **Trougnoux, Mael**
**92120 Montrouge (FR)**

(74) Mandataire: **Cour, Pierre et al**
**Axalto SA**
**IP & Licensing Department**
**6, rue de la Verrerie**
**92197 Meudon Cedex (FR)**

(54) **Procédé de synchronisation d'image pour marquage invisible**

(57) Un procédé de synchronisation d'image simplifié est proposé. La synchronisation réalisée est simplifiée par la connaissance des caractéristiques d'impression d'une photo 10 sur une carte 4 d'identité et par la maîtrise de la chaîne d'acquisition d'image 20-23. On caractérise la chaîne de prise de vue. On détermine des zones réduites devant contenir des marques de synchronisation. On recherche dans chaque zone réduite une corrélation maximale pour la marque de synchronisation associée à ladite zone. Une carte 4 avec photo 10 comporte un message caché dans la photo ainsi que des marques de synchronisation. La carte comporte en outre un autre support d'information 14 mémorisant des informations relatives aux marques de synchronisation.

Fig. 2

EP 1 802 093 A1

**Fig. 7**

**Description**

L'invention se rapporte à un procédé de synchronisation d'image pour marquage invisible. Plus particulièrement, l'invention se rapporte au marquage invisible sur des cartes d'identités.

Le marquage invisible, également connu sous l'appellation anglaise « watermarking », sert à encoder des données de manière cachée à l'intérieure d'un support tel que du son ou de l'image. Le marquage invisible peut être utilisé pour différentes raisons de sécurisation. Les données cachées peuvent être des données identifiant des droits sur l'image ou des données visant à indiquer la validité d'une photo, par exemple sur une carte d'identité. Le marquage invisible sert à cacher les données de sorte qu'il ne soit possible de les retrouver ou de les modifier qu'avec un traitement d'image approprié. Différentes techniques de traitement d'image sont utilisées en fonction des attaques que peut subir l'image, de la robustesse de mémorisation souhaitée, et de la difficulté à retrouver les données dans l'image. Par attaque, il faut comprendre les modifications de l'image involontaires et volontaires qui peuvent compromettre la lecture du message dans l'image.

Pour retrouver les données cachées, il est nécessaire de s'affranchir des modifications involontaires. Pour une photo sur une carte d'identité, les modifications involontaires de l'image peuvent être liées au vieillissement de l'image (rayures, impacts,...) mais aussi au procédé d'impression de l'image ou encore à l'acquisition numérique de l'image. Ces modifications involontaires entraînent généralement des modifications géométriques (translation, rotation, homothétie, ou autre déformation) de l'image qui modifie son format initial et rendent plus difficile voire impossible la relecture. Avant de pouvoir décoder un message inséré dans une image, il convient de remettre l'image dans un format où il est possible de réaliser le traitement d'image destiné à retrouver les données. Cette étape préalable au traitement d'image est communément appelée « synchronisation d'image ». Dans les schémas traditionnels de lecture de message caché, la synchronisation d'image est généralement complètement indépendante de la lecture du message mais peut, dans certain cas être intégrée à la lecture du message.

Il existe de nombreux procédé de synchronisation à partir de marques plus visibles que le message caché. Ces procédés sont très puissants d'un point de vue théorique et sont en outre opérationnels.

Un premier procédé consiste à faire une recherche exhaustive des transformations. On recherche des marques ou directement le message en effectuant toutes les transformations possibles en rotation, translations et homothéties. Cette solution n'est industriellement pas envisageable pour des lecteurs à faible coût car il est nécessaire d'avoir une puissance de calcul considérable pour pouvoir le mettre en oeuvre.

Un deuxième procédé consiste à insérer des marques dans des espaces insensibles à une ou à plusieurs transformations (tel que par exemple Fourier-Melin ou Radon). Ces espaces sont forcément complexes et demandent beaucoup de ressources de calcul. En outre, l'image est modifiée par les différentes attaques subis et par les attaques liées à l'impression de l'image et à la prise de vue. La littérature spécialisée montre de très bons résultats mais aussi certaines faiblesses en fonction des attaques subis.

Un troisième procédé consiste à insérer des marques identiques et périodiques sur l'image qui peuvent se retrouver par auto-corrélation de l'image. Les pics obtenus par auto-corrélation permettent de déduire la transformation en rotation, translation et homothétie qu'a subit l'image originale. Auto-corréler deux images est très lourd en calcul. En outre, il peut être difficile de retrouver des pics de corrélation distinctifs après certains type d'attaque. En outre, ce procédé est très peu sécuritaire car n'importe qui peut synchroniser l'image sans connaissance préalable.

Un quatrième procédé consiste à insérer des marques d'étalonnage dans l'espace de fourrier. En se plaçant au niveau des moyennes fréquences on peut « gonfler » le module dans l'espace de fourrier d'un certain nombre de moyennes fréquences et ainsi se synchroniser sur la base de ce secret. La littérature montre de bons résultats mais montre aussi quelques limites à des attaques de type déformation géométrique.

Tous ces procédés présentent des forces et faiblesses qui dépendent des attaques qu'à pu subir l'image. Quasiment toutes se placent dans un contexte le plus général de transformations en rotation, translation et homothétie totalement inconnues. Ces procédés restent complexes et souvent lourds à mettre en oeuvre. L'utilisation de marques est fortement perturbée par les attaques liées à l'impression, communément appelées « print attacks », et à l'acquisition d'image, communément appelées « scan attacks », que peut subir une image imprimée sur une carte d'identité. Plus la méthode est complexe, et plus la synchronisation est délicate lorsque l'image est attaquée. Si l'image est mal synchronisée, la marque sera mal ou pas du tout détectée. De plus, ces procédés ne sont pas adaptés pour être utilisés dans des lecteurs portables et bas coûts destinés à authentifier des cartes d'identités sécurisées à l'aide d'informations cachées dans une photo d'identité par marquage invisible.

Un procédé de synchronisation d'image simplifié est proposé. La synchronisation réalisée est simplifiée par la connaissance des caractéristiques d'impression d'une photo sur une carte d'identité et par la maîtrise de la chaîne d'acquisition d'image. Les déformations de l'image sont contenues dans une gamme réduite, et une recherche exhaustive de marques peut être réalisée dans des zones réduites de l'image.

Selon un premier aspect, l'invention est un procédé de synchronisation d'une image acquise par une chaîne de prise de vue pour une carte comportant au moins une photo. La chaîne de prise de vue comporte un moyen de positionnement de la carte et un dispositif de prise d'image fixe par rapport au moyen de positionnement. Ledit procédé comporte :

- une étape préalable de caractérisation de la chaîne de prise de vue permettant d'acquérir des paramètres de déformation d'image liés à ladite chaîne de prise de vue,
- une étape de positionnement de carte à l'aide du moyen de positionnement,
- une étape de prise d'image, ladite image comportant au moins la photo de la carte,
- une étape de détermination d'au moins deux zones réduites devant comporter chacune au moins une marque de synchronisation préalablement connue, chaque zone réduite étant déterminée en fonction de la position théorique de ladite marque, des paramètres acquis et d'une tolérance d'impression de la photo sur la carte,
- une étape de recherche dans chaque zone réduite d'une corrélation maximale entre la marque de synchronisation et une marque prédéterminée par déplacement en translation de ladite marque prédéterminée, puis de calcul d'un vecteur de translation de la marque de synchronisation correspondant à la différence entre la position de la corrélation maximale et la position théorique de la marque de synchronisation,
- une étape de calcul de déformation d'image en fonction des vecteurs calculés, et
- une étape de transformation et de recadrage d'image visant à appliquer une transformation correspondant à l'inverse de la déformation calculée.

Préférentiellement, la marque prédéterminée peut être obtenue par transformation d'une marque théorique en fonction des paramètres acquis. De plus, la rotation de l'image introduite par la chaîne d'acquisition pouvant être négligée pour la recherche des marques de synchronisation, la transformation de la marque théorique peut être seulement une homothétie.

Selon un mode de réalisation préféré, l'étape de calcul de déformation de l'image utilise uniquement les paramètres acquis pour déterminer la déformation en homothétie, et utilise les paramètres acquis et les vecteurs calculés pour déterminer les déformations en translation et en rotation.

Selon un deuxième aspect, l'invention est un dispositif de lecture de message caché dans une photo d'une carte, qui comporte : un moyen de positionnement de carte, un dispositif de prise d'image et un dispositif de traitement. Le dispositif de prise d'image est maintenu de manière fixe par rapport au moyen de positionnement. Le dispositif de traitement est apte à mémoriser des images prises par le dispositif de prise d'image et à effectuer différentes opérations de calcul. Le dispositif de traitement permet d'acquérir des paramètres de déformation d'image liés au dispositif de lecture, de déterminer au moins deux zones réduites pour la recherche de marques de synchronisation dans la photo où l'on souhaite lire un message caché, de rechercher lesdites marques de synchronisation dans lesdites zones réduites, de calculer une déformation de la photo, et de transformer la photo à l'inverse de la déformation calculée.

Préférentiellement, le dispositif de prise d'image peut comporter une caméra à CCD et un moyen d'éclairage. Le moyen de positionnement peut être un moyen de positionnement par taquets.

Selon différentes variantes, la carte est une carte à puce et le dispositif comporte une interface pour communiquer avec la puce de ladite carte pour lire des informations dans ladite puce. La carte est une carte à bande magnétique et le dispositif comporte une interface pour lire des informations sur ladite bande magnétique de ladite carte. La carte comporte des informations marquées sur une zone de lecture optique et le dispositif comporte un lecteur optique pour lire les informations dans ladite zone de lecture optique de la carte.

Selon un troisième aspect, l'invention est une carte avec photo destinée à identifier une personne de manière sûre. La photo comporte un message caché et des marques de synchronisation permettant de retrouver le message caché. La carte comporte au moins un autre support d'information mémorisant une ou plusieurs des informations suivantes :

- positions théoriques des marques de synchronisation de la photo,
- formes des marques de synchronisation,
- identifiant permettant de retrouver dans un serveur les positions théoriques des marques de synchronisation,
- identifiant permettant de retrouver dans un serveur les formes des marques de synchronisation.

Selon différentes variantes, l'autre support d'information est un circuit intégré. L'autre support d'information est une bande magnétique. L'autre support d'information est une zone de lecture optique.

Préférentiellement, les informations de l'autre support d'information sont cryptés. La carte peut être une carte d'accès personnalisée, une carte nationale d'identité, un passeport ou tout autre document permettant d'identifier de manière sûre une personne physique.

L'invention sera mieux comprise, et d'autres particularités et avantages apparaîtront à la lecture de la description qui va suivre, la description faisant référence aux dessins annexés, donnés à titre purement indicatif et non réalisés à l'échelle, parmi lesquels :

la figure 1 représente une chaîne d'insertion et d'extraction d'un message caché,

la figure 2 représente une carte à puce avec une photo imprimée,

la figure 3 représente une chaîne d'acquisition d'image pour l'extraction d'un message caché, selon l'invention,

les figures 4a et 4b représentent des cartes de référence permettant de calibrer une chaîne d'acquisition,

la figure 5 montre un exemple de marque de synchronisation,

la figure 6 montre une photo munie de marques de synchronisation,

la figure 7 représente un dispositif de lecture de message caché selon l'invention,

la figure 8 représente un dispositif portatif simplifié, et

la figure 9 illustre l'étalonnage de la chaîne de prise d'image.

L'invention porte sur la synchronisation d'image pour retrouver des messages cachés dans des documents d'identité. Dans l'exemple préféré qui est décrit, le document d'identité est réalisé sous la forme d'une carte à puce au format carte de crédit. Préférentiellement et pour une utilisation améliorée, la puce est un élément optionnel important. Toutefois, l'invention ne se limite pas à une carte d'identité au format carte à puce et pourrait être un passeport électronique comportant une puce ou encore tout autre document officiel disposant d'une photo d'identité et éventuellement d'un support d'information annexe de type puce, bande magnétique ou tout autre moyen d'écrire des informations codées de type code à barres ou un autre procédé à lecture optique d'une zone codée.

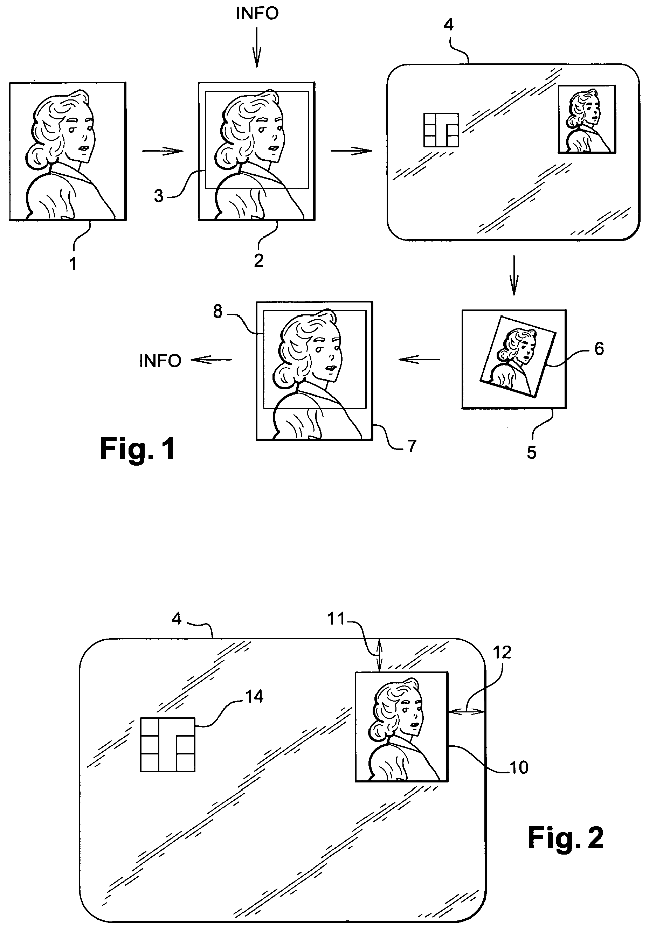

Avant d'expliquer la synchronisation mise en oeuvre selon l'invention, il convient de détailler comment le marquage caché est employé de manière courante puis de souligner les détails de mise en oeuvre pris en compte pour réaliser la synchronisation selon l'invention. La figure 1 illustre la chaîne d'opérations subies par une photo d'identité dans laquelle un message est caché puis retrouvé.

La photo d'identité 1 est une photo sous forme numérique ayant par exemple un format 2/3, correspondant à 512 pixel de large par 768 pixels de hauteur. Une photo encodée 2 est réalisée à partir de la photo d'identité 1 en ajoutant des données cachées INFO. Les données cachées constituent un message qui est encodé dans une zone d'image 3 qui est préférentiellement une zone carrée pour simplifier et accélérer les calculs à effectuer. L'ajout des données cachées peut se faire, par exemple, dans le domaine des fréquences spatiales à l'aide d'une transformée de Fourier de la zone d'image 3. La zone d'image 3 est transformée à l'aide d'une transformation de Fourier, les données cachées INFO sont ajoutées de manière redondante dans des zones prédéterminées de fréquences moyennes de la transformé de Fourier de la zone d'image 3, puis cette transformée de Fourier est ensuite retransformée en zone d'image 3 qui est réinsérée dans la photo encodée 2. Des marques de synchronisation peuvent, en outre, être ajoutées sur la photo encodée 2. Il est important de souligner que dans le cadre spécifique de l'invention, le message peut être encodé dans l'espace de Fourier alors que les marques de synchronisation sont insérées de manièe spatiale dans l'image.

La photo encodée 2 est ensuite imprimée sur un document d'identité, par exemple la carte à puce 4. L'impression de la photo encodée constitue une attaque de la photo dans la mesure où des déformations correspondant à des déplacements d'image peuvent intervenir et le signal résultant subit un filtrage passe-bas affectant surtout les hautes fréquences. En outre, une fois la photo imprimée sur la carte 4, celle-ci subit des phénomènes d'usure (impacts, rayures...) qui altèrent son aspect.

Pour pouvoir lire le message caché, il est nécessaire de prendre une photo 5 de la carte 4 incluant la photo d'identité 6. Cette photo 5 peut également introduire des déformations de type translation, rotation ou homothétie. La somme des déformations subies par la photo d'identité 6 peuvent rendre impossible la lecture des données cachées. Il est alors nécessaire de synchroniser la photo 5 pour obtenir une photo synchronisée 7 de même format et avec le même cadrage que la photo encodée 2. L'image synchronisée 7 peut alors être traitée et les données cachées INFO peuvent être extraites de la zone d'image encodée 8.

Dans ce document, il va être détaillé comment se fait la synchronisation de la photo. Avant cela, il convient de souligner quelques caractéristiques de ce type d'application qui vont être utilisées pour simplifier le traitement de synchronisation et permettre la réalisation d'un dispositif peu puissant et peu coûteux. L'application qui nous intéresse est la lecture de messages cachés dans les photos d'identité de cartes servant à identifier de manière sûre des personnes. Cette application permet d'authentifier une pièce d'identité. Ces cartes ou pièces d'identité répondent à un cahier des charges assez strict et elles sont réalisées à l'aide de procédés de fabrication connus et parfaitement maîtrisés.

A titre d'exemple, la figure 2 montre une carte à puce 4 munie d'une photo d'identité 10. La photo d'identité 10 est imprimée sur la carte à puce 4 lors d'une étape de personnalisation. L'impression se fait dans une zone prévue à l'avance avec des côtes de positionnement 11 et 12 parfaitement maîtrisées. Généralement, les côtes de positionnement sont données avec une tolérance inférieure au millimètre et généralement de l'ordre de quelques centaines de microns. En outre, les procédés d'impression introduisent peu de rotation de l'image et pratiquement pas d'homothétie. La photo d'identité 10 imprimée sur la carte 4 est majoritairement modifiée par un faible vecteur de translation par rapport au bord de la carte.

Quelque que soit la pièce d'identité considérée, les contraintes d'impression sont du même ordre. Si le support de la photo est une carte de type plastifiée ou suffisamment rigide (couverture de passeport) pour ne pas être affecté par une usure des bords de carte, la photo d'identité 10 est facilement repérable par rapport au bord de la carte 4.

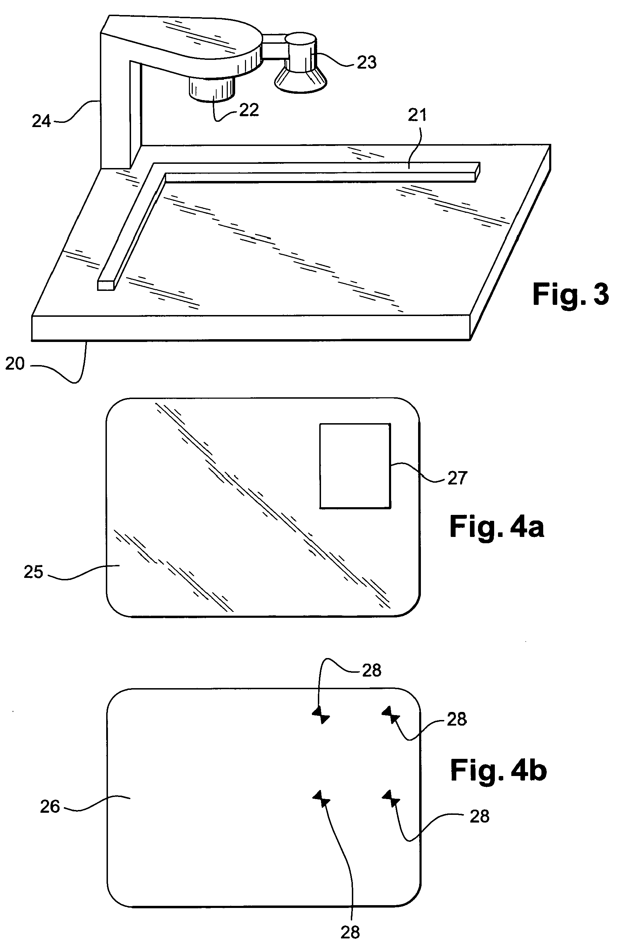

Pour récupérer les données cachées, la première chose à faire est de prendre une photo de la photo d'identité. Les conditions dans lesquelles la photo est prise correspondent à un contrôle d'identité. De manière préférée, ce contrôle doit être réalisé à l'aide d'un dispositif simple d'emploi. Un dispositif de prise de vue est par exemple représenté sur la figure 3. Le dispositif de prise de vue comporte une tablette 20 servant de support à la carte pendant la prise d'image. La tablette 20 comporte un moyen de positionnement 21 de carte, qui est par exemple un système de positionnement par taquets constitués de deux règles destinées à être mise en contact avec les bords de la carte 4. Le positionnement par taquets 21 fixés à la tablette permet à un opérateur de positionner très rapidement la carte à contrôler avec une précision de positionnement de l'ordre de 100 μm.

Un dispositif de prise d'image, par exemple constitué d'une caméra à CDD 22 et d'un moyen d'éclairage 23, est maintenu de manière fixe par rapport au moyen de positionnement 21. Le maintien est par exemple assuré à l'aide d'un bras de maintien 24 fixé d'une part à la tablette 20 et d'autre part à la caméra 22. Avec un tel dispositif la prise d'image se fait en altérant la photo d'identité. Les tolérances d'assemblage des différents éléments doivent être prises en compte pour déterminer quels défauts sont introduits en translation et en rotation, en outre l'objectif de la caméra introduit également une modification en homothétie. En outre, il est possible que le dispositif évolue dans le temps, le bras de maintien 24 pouvant être tordu à l'usage.

Toutes les déformations d'image liées à la prise de vue peuvent cependant être aisément résolues en caractérisant la chaîne de prise de vue. Cela peut se faire facilement à l'aide de cartes d'étalonnage 25 et 26, telles que représentées sur les figures 4a et 4b. Ces cartes d'étalonnage 25 et 26 sont imprimées avec une grande précision sur l'impression de marques de repérage facilement repérable par un procédé de traitement d'image pour calibrer la chaîne de prise de vue. La carte 25 comporte par exemple un cadre 27 correspondant aux contours de la photo d'identité. Le cadre 27 peut être extrait de l'image par reconnaissance de forme afin de déterminer les différences de tailles et de position par rapport à une position théorique souhaitée et ainsi obtenir des paramètres de déformation d'image liés à la prise d'image. Les imperfections du capteur et du contexte de prise d'image peuvent ainsi être modélisées et corrigées.

La carte 26 comporte des marques de repérage 28 dont la position dans une image est facilement déterminable par des algorithmes de reconnaissance de formes largement connus. Les marques 28 sont par exemple positionnées là où doit se situer la position théorique des coins de la photo d'identité d'une carte. Suite à une corrélation, la position des marques dans l'image est rapidement obtenue. Une comparaison de la position des marques 28 par rapport à leur position théorique, permet de déterminer les paramètres de déformation d'image. Il est à noter que plusieurs type de cartes 26 peuvent être utilisée avec des positionnements de photo différents pour correspondre à différent type de documents, par exemple un passeport et une carte d'identité.

Au vu de ce qui précède, la synchronisation complète de la photo d'identité se trouve être limitée aux déformations liées à l'impression de la photo 10 sur la carte 4. Ces déformations étant assez minimes il est possible de réaliser un procédé de synchronisation simplifié. Le choix fait selon l'invention consiste à insérer des marques de synchronisation pour rendre plus précise la synchronisation et, de ce fait, faciliter la relecture du message caché.

Les marques de synchronisation sont insérées dans la photo. La forme et la position de ces marques sont mémorisées et constituent un secret nécessaire pour la relecture du message caché. Le stockage peut être réalisé dans un serveur sécurisé ou directement sur un élément physique de la carte, tel que par exemple la puce de la carte. La synchronisation complète de la photo d'identité 10 se fait en mesurant les déplacements des marques de synchronisation par rapport à leur position théorique. Ensuite, il est possible de calculer la transformation inverse à appliquer à l'image acquise.

La technique de synchronisation se base sur le fait que, le contexte d'acquisition de l'image étant modélisé, les transformations appliquées à l'image sont limitées à de petites translations suivant les deux axes et à une très légère rotation. Dans ce domaine de transformation, l'agencement des pixels au niveau local n'est quasiment pas affecté par la rotation. Ainsi en déterminant les déplacements locaux de zones réparties dans l'image et dont la position originale est connue, il est possible de connaître la transformation affine globale (translations et rotation) subie par toute l'image.

Dans le contexte d'utilisation du procédé de l'invention, il n'est pas possible d'utiliser directement l'information de valeur des pixels pour connaître les déplacements. En effet, pendant les phases d'impression et d'acquisition, les valeurs locales des pixels sont fortement affectées par des variations de luminosité et de contraste, de balance des couleurs ainsi que de l'ajout de bruit et de filtrage passe bas.

Deux types de marques peuvent être employés pour la synchronisation. Ces marques de synchronisation doivent avoir la particularité d'être résistantes aux différentes attaques du système et d'être peu visibles, voire invisibles, à l'oeil humain de manière à ne pas polluer l'image.

Des marques aléatoires, ou indépendantes de l'image, peuvent être utilisées. La méthode consiste à insérer dans le plan de luminance de l'image un signal généré à l'aide d'une clé secrète (signal aléatoire de valeur +1 ou -1), suivant des blocs 8x8 ou 16x16 de l'image, en fonction d'un paramètre de force paramétrable, de l'aspect psycho-visuel de la zone (des paramètres statistiques, tel que moyenne et variance par exemple, mais aussi des attributs de texture plus sophistiqués) ainsi que de la position spatiale du bloc (répartition uniforme sur l'image).

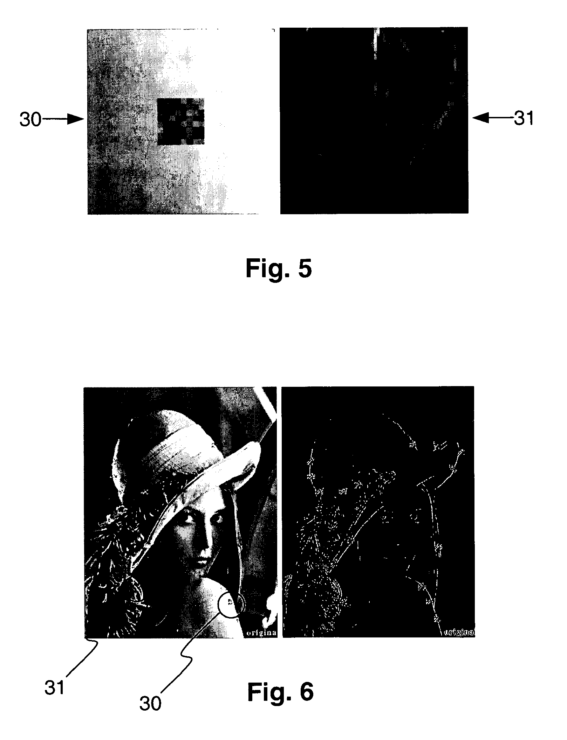

L'utilisation d'un signal aléatoire rend la technique sécurisée en matière de fraude. Les blocs générés sont ajoutés à l'image suivant un critère de force. La force d'une zone est représentative de la capacité de la zone à accepter une marque sans que celle-ci devienne visible à l'oeil nu. Cette force est calculée en fonction de la texture et de la luminosité de la zone. La figure 5 illustre le phénomène d'insertion suivant des zones texturées ou non. Comme on peut le voir sur la figure, une marque 8x8 pixels peut être visible ou complètement invisible suivant l'endroit où elle est placée. L'image de gauche de la figure 5 montre une zone de luminosité moyenne faiblement texturée où la marque de synchronisation 30 est très visible. L'image de droite de la figure 5 montre une zone de même luminosité fortement texturée dans laquelle la marque de synchronisation 31 est quasi invisible. Pourtant les marques 30 et 31 sont identiques et appliquées avec la même force. La figure 6 représente une photo disposant de plusieurs marques ainsi que cette même photo filtrée à l'aide d'un filtre passe-haut qui permet de mieux montrer les marques de synchronisation.

De telles marques de synchronisation doivent être peu visibles car elles sont rajoutées dans la photo. Le caractère invisible de la marque tient de la force de la marque et du choix de la position d'insertion. Une marque faiblement contrastée sera moins visible mais aussi plus facilement effaçable ou non détectable.

Cependant, la synchronisation réalisée sur les marques se limite à la déformation due à l'impression qui est relativement faible. Il est donc possible de rechercher chaque marque dans une zone réduite autour de la position théorique de la dite marque, cela permet aussi d'utiliser des marques plus ténues. En outre, pour synchroniser la photo, deux marques peuvent suffire en théorie mais il est courant et fortement conseillé d'utiliser des marques redondantes car une marque peut être effacée ou devenir illisible suite à une attaque volontaire ou involontaire. L'usage de 3 à 5 fois plus de marques que nécessaire permet de réduire la visibilité des marques de synchronisation tout en garantissant qu'un certain nombre sera toujours détectable.

En outre, selon l'invention, les zones de recherche sont des zones réduites. Cela permet d'utiliser les informations de l'image pour sélectionner les marques de synchronisation. L'image est décomposée en blocs de 8 x 8 ou 16 x 16 pixels correspondant potentiellement à des marques de synchronisation. Les blocs sont sélectionnés en fonction de leur position dans l'image, par exemple une répartition équitable dans la photo, et de la force associée à ces blocs, par exemple en fonction de la moyenne lumineuse et de la variance lumineuse dans le bloc. Au lieu d'insérer du bruit dans ces blocs, les informations hautes et moyennes fréquences des blocs sont directement utilisées comme marques de synchronisation. Afin d'améliorer la robustesse face aux attaques déformantes, ces informations hautes fréquences peuvent être amplifiées.

Un procédé d'insertion de marques de synchronisation basées sur l'information de la photo peut se dérouler ainsi:

- Découpage de l'image en 4 sous images,
- Découpage des sous images en blocs de 8x8 ou 16x16 pixels,
- Calcul de la force sur chacun des blocs,
- Tri des blocs par force décroissante pour chaque sous-image,
- Conservation des "N" premiers blocs pour chacune des sous-images avec un critère de distance choisi en fonction de la taille de la photo, du nombre de blocs et de la taille des blocs. A titre d'exemple "N" peut être compris entre 1 et 10. En prenant N=5 soit 20 blocs par photo, un bon compromis est atteint entre rapidité de calcul et robustesse aux attaques qui entraîne la disparition de blocs par détérioration de la photo.
- Calcul d'une amplification à appliquer aux blocs en fonction de la force de chaque bloc.
- Remplacement des blocs amplifiés de la photo.
- Enregistrement des positions et des motifs de blocs utilisés comme marques de synchronisation.

Avant de passer à l'explication complète du procédé de synchronisation, il convient de noter que les marques de synchronisation et leur positions doivent être connues pour être retrouvées. Cela est d'autant plus vrai que les marques sont le moins visible possible. Différentes possibilités sont envisageables.

Selon une première possibilité, toutes les photos comportent les mêmes types de marques de synchronisation, placées aux même positions. Le dispositif de lecture va alors chercher ces marques autour de ces positions. Cependant, cette possibilité est peu sûre car cela facilite le repérage des marques par un fraudeur disposant de plusieurs cartes.

Une deuxième possibilité est de centraliser les informations sur les marques de synchronisation dans un serveur protégé et d'aller chercher les informations sur l'aspect et la position des marques avant de procéder à la recherche desdites marques. Ce type de possibilité est très adapté pour une utilisation de sécurisation d'accès ou pour un contrôle douanier. L'information peut être récupérée sur le serveur sécurisée à l'aide du nom du titulaire de la carte ou d'un identifiant inscrit sur une piste magnétique ou dans une zone de lecture optique, par exemple de type code barre.

Une troisième possibilité est de mémoriser l'aspect et la position de chacune des marques de synchronisation dans une puce 14 associée à la carte 4. Préalablement ou même pendant la synchronisation, le dispositif de traitement qui réalise la synchronisation de la photo 10 peut lire les informations dans la puce 14 et les utiliser. Un autre avantage de la puce est de pouvoir mémoriser les informations relatives aux marques de manière cryptée afin que seul un dispositif de traitement possédant la clef de décryptage puisse y accéder.

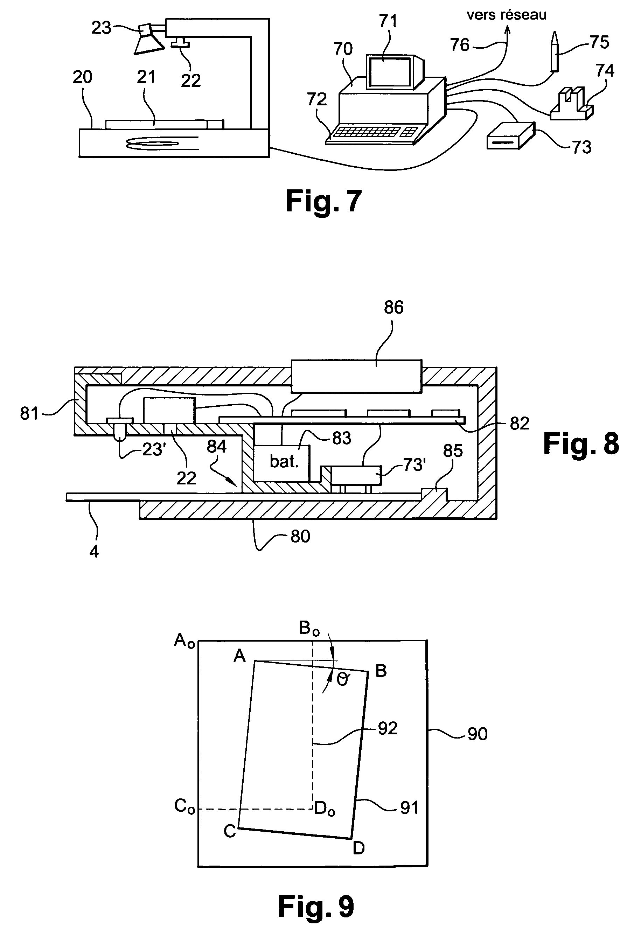

A titre d'exemple, la figure 7 montre un dispositif de lecture de message caché complet et polyvalent pour authentifier une carte avec photo. Le dispositif complet comporte le dispositif de prise de vue décrit précédemment. Cependant le dispositif de prise de vue peut disposer d'une tablette 20 munie d'une antenne et d'une interface de communication sans fil pour pouvoir communiquer avec une carte sans contact telle que par exemple un passeport électronique à puce. Une unité de traitement 70, par exemple un ordinateur personnel de type PC, est connecté au dispositif de prise de vue pour pouvoir exploiter les images prises par la caméra 22 et éventuellement pour communiquer avec la carte par l'intermédiaire de l'interface de la tablette 20. L'unité de traitement 70 dispose en outre d'un écran 71, d'un clavier 72, d'un lecteur de carte à puce 73, d'un lecteur de piste magnétique 74, d'un crayon optique 75 et d'une connexion 76 à un réseau informatique.

L'écran 71 et le clavier 72 servent d'interfaces à un opérateur cherchant à authentifier la photo. Dans l'exemple, toutes les interfaces permettent de lire des informations sur tout type de carte. Dans la pratique, il est possible qu'une seule interface soit suffisante si un seul type de carte doit être authentifié. La suppression de certaines interfaces peut permettre d'intégrer le dispositif dans un boîtier portable de petite dimension.

La figure 8 montre un exemple de réalisation d'un dispositif portable en coupe qui permet d'authentifier la photo d'identité. Un boîtier moulé en deux parties 80 et 81 dispose d'un connecteur 73' destiné à venir en contact avec le connecteur de la carte à puce 4. Le boîtier comporte des moyens de positionnement tel que la fente 84 et la buté 85 qui assurent la fonction de positionnement nécessaire à la caméra 22. Au moins une diode 23' fournit de la lumière blanche et assure l'illumination nécessaire à la prise de vue par la caméra à CCD 22. Une carte électronique 82 est reliée à la caméra 22, la diode 23' et le connecteur 73'. La carte électronique 82 comporte un ensemble incluant un microprocesseur, de la mémoire vive et de la mémoire morte, assure les fonctions de traitement d'image et gère les échanges d'information avec la puce de la carte 4. Une batterie rechargeable 83 est logée dans le boîtier et sert à alimenter l'ensemble des composants. Un écran tactile 86 à cristaux liquides est fixé au boîtier et est reliée à la carte électronique 82 pour servir d'interface avec un opérateur. Ce type de boîtier est facilement transportable pour permettre des contrôles d'identité sans nécessiter le raccord du boîtier à un serveur central.

Le procédé de synchronisation d'image mis en oeuvre par l'invention peut être à présent être décrit de manière détaillée. Ce procédé pourra être traduit en programme pour le dispositif de traitement qui réalisera le traitement d'image. Le procédé consiste à détecter les déplacements relatifs subis par les marques de synchronisation. Les transformations inverses sont alors calculées en minimisant l'erreur quadratique moyenne entre les positions théoriques des marques de synchronisation et les positions calculées desdites marques après recalage.

La recherche dans l'image acquise des déplacements locaux des marques de synchronisation permet de connaître la transformation subie par l'image acquise. Cette transformation étant connue, il devient alors possible de déterminer la transformation inverse à effectuer pour synchroniser l'image. Les déplacements sont déterminés en corrélant chaque marque de synchronisation, préalablement connue, aux pixels de l'image acquise dans un rayon réduit, par exemple de l'ordre d'une vingtaine de pixels, autour de la position théorique de ladite marque. Comme précédemment expliqué, la transformation globale est raisonnablement maîtrisée, et la structure des marques est peu affectée. Le déplacement peut être déterminé avec précision sans nécessiter de calculs trop importants.

Afin de permettre la simplification de la recherche, une étape de caractérisation de la chaîne de prise de vue est réalisée avant de prendre une image de la photo à authentifier. Cette étape de caractérisation permet d'acquérir des paramètres de déformation d'image liés à ladite chaîne de prise de vue. Une carte d'étalonnage 25 ou 26 est positionnée dans un dispositif de prise de vue, par exemple sur la tablette 20 en buté sur les taquets 21. Puis une image d'étalonnage est prise par la caméra 22. Un traitement d'image est ensuite réalisé sur l'image d'étalonnage pour déterminer la position en pixel des coins délimitant la photo. La carte d'étalonnage 25 ou 26 étant considérée comme ayant une précision inférieure à celle du pixel, la mesure d'écart par rapport à la position théorique des coins de la photo permet d'obtenir de manière relativement simple les paramètres de déformation liés à la prise d'image.

A titre d'exemple, la figure 9 illustre l'étape de caractérisation. L'image d'étalonnage 90 est prise avec une définition supérieure à la définition connue de la photo. A titre d'exemple, l'image d'étalonnage 90 est par exemple une image de 1024 x 1024 pixels alors que la photo est de 512 x 768 pixels. Au milieu de cette image d'étalonnage 90 se trouve le cadre 91 correspondant aux contours de la photo. Un petit traitement d'image permet d'extraire les points A, B, C et D correspondant aux coins du cadre 91. La déformation subie par l'image est considérée homogène et se limite selon l'exemple de l'invention à quatre paramètres correspondant à deux translations $T_X$ et $T_Y$ (défaut de centrage de la caméra par rapport aux moyens de positionnement), une rotation θ (erreur de positionnement angulaire de la caméra) et une homothétie homogène H (imprécision sur la focale) pour ramener la photo à une position théorique 92 où la photo est positionnée pour le traitement. Le point d'origine de l'image se trouvant dans le coin supérieur gauche, pour chaque point A, B, C et D la déformation entre les coordonnées d'origine (x, y) et mesurées (x', y') se traduit par l'équation matricielle suivante :

$$\begin{pmatrix} x' \\ y' \end{pmatrix} = H \cdot \begin{pmatrix} \cos\theta & \sin\theta \\ -\sin\theta & \cos\theta \end{pmatrix} \cdot \begin{pmatrix} x \\ y \end{pmatrix} + \begin{pmatrix} T_x \\ T_y \end{pmatrix}$$

Théoriquement, deux points caractéristiques peuvent suffire pour déterminer ces quatre paramètres cependant, l'utilisation d'attribut de forme, tel que par exemple des segments de droite, permet d'améliorer la précision de ces paramètres en utilisant quatre points. A titre d'exemple la méthode des moindres carrés permet de minimiser l'erreur quadratique moyenne. Cette méthode revient à trouver l'ensemble de paramètres $T_X$, $T_Y$, θ et H permettant d'obtenir la valeur minimum pour la formule suivante, dans laquelle le symbole de somme indique que l'on effectue la somme pour les coordonnées de tous les points A, B, C et D :

$$F(T_x, T_y, \theta, H) = \sum \left\| H \cdot \begin{pmatrix} \cos\theta & \sin\theta \\ -\sin\theta & \cos\theta \end{pmatrix} \cdot \begin{pmatrix} x \\ y \end{pmatrix} + \begin{pmatrix} T_x \\ T_y \end{pmatrix} - \begin{pmatrix} x' \\ y' \end{pmatrix} \right\|^2$$

De nombreux programmes de calcul permettent de résoudre ce genre d'opération d'une manière assez rapide sans nécessiter de grandes capacités de calcul. Il convient de munir l'unité de traitement du programme adéquat.
L'étalonnage du dispositif peut également prendre en compte plusieurs facteurs de forme de carte d'identité. Il est possible que le dispositif de lecture mémorise quelques caractéristiques correspondant à différents types de carte d'identité, par exemple les tailles réelles de photo en pixels ou encore le sens de la photo sur la carte présentée.
L'étape d'étalonnage ayant été faite, il est ensuite possible d'authentifier plusieurs cartes d'identité du même type sans avoir besoin de calibrer le dispositif de prise d'image entre deux vérifications. Pour ce faire, la carte d'identité à authentifier est placée par un opérateur au cours d'une étape de positionnement. L'opérateur n'a qu'à placer la carte sur la tablette 20 en buté avec les taquets 21, assurant ainsi un rapide positionnement de la carte avec une précision de l'ordre de 100 μm à l'aide des moyens de positionnement.
Préalablement à l'étape de positionnement ou un peu après, suivant le type de dispositif, le dispositif de lecture va lire une ou des informations associées à la carte correspondant aux formes et positions des marques de synchronisation dans la photo, ou alors une information permettant de retrouver sur un serveur les formes et positions desdites marques.
Puis, vient une étape de prise d'image où la carte positionnée est numérisée par la caméra 23. Cette image est affectée de la déformation liée à la chaîne de prise de vue mais aussi liée à l'impression de la photo sur la carte. Les paramètres $T_X$, $T_Y$, θ et H correspondant à la déformation de prise de vue, seul la déformation liée à l'impression et au positionnement de la carte 4 sont à corriger. Pour mesurer la déformation restante, les marques de synchronisation sont utilisées. Il est possible de rechercher ces marques de synchronisation dans une image corrigée à l'aide des paramètres préalablement mesurés ou directement dans l'image prise. Or chaque transformation d'image entraîne une perte d'information. Préférentiellement, les marques sont recherchées dans l'image prise afin d'éviter une transformation d'image intermédiaire.
Une étape de détermination sert à délimiter les zones de recherches des différentes marques de synchronisation. Cependant, comme indiqué précédemment, les déformations sont essentiellement des translations associées à très peu de rotation et quasiment aucune homothétie. Il pourrait suffire de rechercher deux marques mais il est préférable de les rechercher toutes. Au cours de l'étape de détermination, une zone réduite de recherche est déterminée pour chaque marque recherchée. Pour définir une zone, on prend la position théorique de la marque de synchronisation qui est associée à ladite zone et on y affecte une erreur de placement liée à une translation correspondant aux tolérances d'impression et erreurs de positionnement. Ramenée sur la photo de la carte, cela peut entraîner un déplacement en X ou en Y de l'ordre de 500 μm. Sur une photo de 512 X 768 pixels au format 24 x 36 mm, le déplacement correspond à un carré d'environ 43 pixels de côté centré sur la position théorique de la marque. Cependant pour effectuer la recherche dans l'image prise, cette zone est déformée à l'aide des paramètres acquis $T_X$, $T_Y$, θ et H.

Les zones de recherches étant déterminées pour chaque marque de synchronisation, il est alors possible de rechercher chaque marque de synchronisation dans la zone réduite qui lui est associée. Au cours, de cette étape de recherche, les marques recherchées sont préalablement transformées par les paramètres de rotation θ et d'homothétie H. Eventuellement il est possible de ne transformer la marque qu'à l'aide du paramètre d'homothétie H car la rotation θ peut être négligée pour la recherche de la marque si θ est faible. Chaque marque déformée est déplacée en translation dans sa zone associée et est corrélée avec l'image pour chaque position possible de ladite marque dans ladite zone. La position correspondant à une corrélation maximale et supérieure à seuil de discrimination de la marque déformée dans la zone permet de repérer la position exacte de la marque sur la photo prise. Un vecteur de déplacement de la marque est calculé en faisant la différence entre la position théorique et la position de corrélation maximale.

Vient alors une étape de calcul de déformation globale de l'image qui recalcule la déformation globale de l'image en fonction des paramètres acquis et des vecteurs de déplacement. Les déformations se combinant entre elles, il est possible de calculer de manière indépendante des paramètres liés à la déformation d'impression et de positionnement puis de combiner ces paramètres à ceux préalablement obtenus pour la déformation de la chaîne de prise de vue. Il est à noter que l'homothétie liée à l'impression est quasi nulle et que l'homothétie liée au positionnement est nulle. Donc seuls des paramètres de translation $\Delta_X$ et $\Delta_Y$ et de rotation φ sont à calculer dans l'image prise. Pour chaque marque de synchronisation, la déformation entre les coordonnées de la position théorique (x, y) dans l'image prise et la position mesurée (x', y') se traduit par l'équation matricielle suivante :

$$\begin{pmatrix} x' \\ y' \end{pmatrix} = \begin{pmatrix} \cos\varphi & \sin\varphi \\ -\sin\varphi & \cos\varphi \end{pmatrix} \cdot \begin{pmatrix} x \\ y \end{pmatrix} + \begin{pmatrix} \Delta_x \\ \Delta_y \end{pmatrix}$$

Deux marques pourraient suffire pour déterminer ces trois paramètres cependant, l'utilisation de quatre points peut permettre d'améliorer la précision de ces paramètres en utilisant. A titre d'exemple, il est encore possible d'utiliser la méthode des moindres carrés pour minimiser l'erreur quadratique moyenne. Cette méthode revient à trouver l'ensemble de paramètres $\Delta_X$, $\Delta_Y$ et φ permettant d'obtenir la valeur minimum pour la formule suivante, dans laquelle le symbole de somme indique que l'on effectue la somme pour les coordonnées de toutes les marques de synchronisation :

$$F(T_x, T_y, \theta, H) = \sum \left\| \begin{pmatrix} \cos\varphi & \sin\varphi \\ -\sin\varphi & \cos\varphi \end{pmatrix} \cdot \begin{pmatrix} x \\ y \end{pmatrix} + \begin{pmatrix} \Delta_x \\ \Delta_y \end{pmatrix} - \begin{pmatrix} x' \\ y' \end{pmatrix} \right\|^2$$

Une fois les paramètres $\Delta_X$, $\Delta_Y$ et φ obtenu, il suffit de les combiner avec les paramètres $T_X$, $T_Y$, θ et H pour obtenir la déformation globale. La formule suivante fait correspondre un pixel de coordonnée (x', y') dans l'image acquise à un pixel de coordonnée (x, y) de l'image de départ

$$\begin{pmatrix} x' \\ y' \end{pmatrix} = H \cdot \begin{pmatrix} \cos\varphi & \sin\varphi \\ -\sin\varphi & \cos\varphi \end{pmatrix} \cdot \begin{pmatrix} \cos\theta & \sin\theta \\ -\sin\theta & \cos\theta \end{pmatrix} \cdot \begin{pmatrix} x \\ y \end{pmatrix} + \begin{pmatrix} \cos\varphi & \sin\varphi \\ -\sin\varphi & \cos\varphi \end{pmatrix} \cdot \begin{pmatrix} T_x \\ T_y \end{pmatrix} + \begin{pmatrix} \Delta_x \\ \Delta_y \end{pmatrix}$$

Un avantage de l'invention est de pouvoir dissocier la recherche des paramètres liés à l'acquisition d'image $T_X$, $T_Y$, θ et H et ceux liés à l'impression et au positionnement de la photo $\Delta_X$, $\Delta_Y$ et φ. Cela permet une simplification de l'acquisition des paramètres.

Une étape de transformation et de recadrage d'image est alors réalisée. Cette étape de transformation consiste à appliquer sur l'image acquise une transformation correspondant à l'inverse de la déformation calculée. A titre d'exemple, il est possible de reconstituer l'image d'origine en allant chercher pour chaque pixel de coordonnée (x, y) la valeur du pixel de l'image acquise (x', y') à l'aide de la formule précédente. Si le pixel correspondant de l'image acquise ne correspond pas à une valeur entière de pixel, il convient de recalculer cette valeur à partir des pixels voisins de l'image acquise, selon une technique connue d'interpolation linéaire.

Cette dernière étape étant réalisée, l'image acquise se trouve alors synchronisée et prête pour que l'on y lise le message caché.

De nombreuses variantes de l'invention sont possibles. Notamment, dans l'exemple précédemment décrit, le calcul de déformation de l'image utilise uniquement les paramètres liés à la chaîne d'acquisition pour déterminer la déformation en homothétie, et utilise tous les paramètres pour les déformations en translation et en rotation. Ce choix vient d'un compromis entre simplification de calcul et précision dans le résultat. Les déformations en rotation et en homothétie ne sont pas très importante et peuvent être facilement être négligées.

Pour simplifier les calculs, les paramètres de déformation liés à la chaîne d'image sont réutilisés, dans l'exemple décrit, pour obtenir la déformation totale de l'image. Il est également possible de calculer la déformation totale de l'image uniquement à l'aide de la position des marques de synchronisation détectées et de la position théorique dans l'image. Cependant, cela revient à recalculer les paramètres $T_X$, $T_Y$, $\theta$ et H à l'aide des marques de synchronisation. Les marques de synchronisation étant en nombre important, les calculs sont alors plus complexes.

Pour simplifier encore les calculs, il est intéressant de remarquer que les rotations d'angles $\varphi$ et $\theta$ sont petites. Il est donc possible de faire une approximation des fonctions sinus et cosinus en les remplaçant par des polynômes du premier degré plus facile à manipuler.

Quelques modifications peuvent aussi être réalisées sans remettre en cause l'invention. Si l'on utilise des marques de synchronisation haute fréquence déterminée de manière aléatoire, il est possible de réaliser un filtrage passe-haut sur l'image prise pour augmenter le résultat de recherche.

Dans l'exemple décrit, il est important de souligner que la synchronisation est réalisée sur l'image non interpolée. C'est les marques de synchronisation qui sont interpolées et non l'image. Ces marques étant « propres », elles sont très peu affectées par l'interpolation et cela permet une meilleure synchronisation que l'opération inverse où l'image subit une l'attaque d'interpolation en plus des autres attaques. Cela n'est possible qu'avec la caractérisation de la chaîne d'acquisition.

Il est possible d'affiner le rapport d'homothétie H à l'aide des marques de synchronisation. Cela se fait automatiquement lorsque l'on recalcule tous les paramètres de déformation de l'image, comme indiqué précédemment. Cependant un tel affinage peut se faire en faisant varier légèrement l'homothétie H lors de la corrélation de marque. La variation de H sur la position de la marque peut augmenter ou diminuer le résultat de la corrélation. Ainsi il est possible de déterminer H' comme étant la valeur correspondant à la corrélation maximale dans un intervalle de variation. L'intervalle de variation dépendant de l'homothétie lié à l'impression étant très petit (inférieure à 0,1%), l'opération peut se faire rapidement.

Plusieurs méthodes d'interpolation ont été testées afin de sélectionner la technique donnant les meilleurs résultats pour le contexte du système. Il s'avère qu'une interpolation aux plus proches voisins donne de très bons résultats pour un temps de traitement record. Une interpolation bi-cubique conserve globalement mieux les informations de l'image, mais il s'avère qu'elle génère un filtrage passe-bas qui perturbe fortement les marques hautes fréquences.

**Revendications**

1. Procédé de synchronisation d'une image acquise (5, 90) par une chaîne de prise de vue (20-23) pour une carte (4) comportant au moins une photo (10), la chaîne de prise de vue comportant un moyen de positionnement de la carte (20, 21) et un dispositif de prise d'image (22) fixe par rapport au moyen de positionnement, ledit procédé comportant :

   - une étape préalable de caractérisation de la chaîne de prise de vue permettant d'acquérir des paramètres ($T_X$, $T_Y$, $\theta$ et H) de déformation d'image liés à ladite chaîne de prise de vue,
   - une étape de positionnement de carte à l'aide du moyen de positionnement,
   - une étape de prise d'image, ladite image comportant au moins la photo (6) de la carte,
   - une étape de détermination d'au moins deux zones réduites devant comporter chacune au moins une marque de synchronisation préalablement connue, chaque zone réduite étant déterminée en fonction de la position théorique de ladite marque, des paramètres acquis et d'une tolérance d'impression de la photo sur la carte,
   - une étape de recherche dans chaque zone réduite d'une corrélation maximale entre la marque de synchronisation et une marque prédéterminée par déplacement en translation de ladite marque prédéterminée, puis de calcul d'un vecteur de translation de la marque de synchronisation correspondant à la différence entre la position de la corrélation maximale et la position théorique de la marque de synchronisation,
   - une étape de calcul de déformation d'image en fonction des vecteurs calculés, et
   - une étape de transformation et de recadrage d'image visant à appliquer une transformation correspondant à l'inverse de la déformation calculée.

2. Procédé selon la revendication 1, dans lequel la marque prédéterminée est obtenue par transformation d'une marque théorique en fonction des paramètres acquis ($T_X$, $T_Y$, $\theta$ et H).

3. Procédé selon la revendication 2, dans lequel la transformation de la marque théorique est une homothétie.

**4.** Procédé selon l'une des revendications 1 à 3, dans lequel l'étape de calcul de déformation de l'image utilise uniquement les paramètres acquis ($T_X$, $T_Y$, $\theta$ et H) pour déterminer la déformation en homothétie, et utilise les paramètres acquis et les vecteurs calculés pour déterminer les déformations en translation et en rotation.

**5.** Procédé selon l'une des revendications 1 à 4, dans lequel l'étape préalable de caractérisation se fait à l'aide des étapes suivantes :

- positionnement d'une carte d'étalonnage à l'aide du moyen de positionnement, la carte d'étalonnage comportant au moins un repère étalonné,
- prise d'une image,
- extraction de l'image du repère étalonné par traitement d'image et détermination de paramètre de déformation d'image par comparaison du repère de l'image avec un repère théorique.

**6.** Procédé selon la revendication 5, dans lequel le repère est un cadre (27).

**7.** Procédé selon l'une des revendications 1 à 6, la carte comportant en outre une puce (14), dans lequel la position théorique des marques de synchronisation est lue dans la puce lors de la prise d'image.

**8.** Procédé selon l'une des revendications 2 à 6, la carte comportant en outre une puce (14), dans lequel les formes des marques théoriques sont lues dans la puce lors de la prise d'image.

**9.** Dispositif de lecture de message caché dans une photo d'une carte, qui comporte :

- un moyen de positionnement de carte (20, 21),
- un dispositif de prise d'image (22) maintenu de manière fixe par rapport au moyen de positionnement,
- un dispositif de traitement (70, 82) apte à mémoriser des images prises par le dispositif de prise d'image et à effectuer différentes opérations de calcul, permettant :

   o d'acquérir des paramètres de déformation d'image liés au dispositif de lecture,
   o de déterminer au moins deux zones réduites pour la recherche de marques de synchronisation dans la photo où l'on souhaite lire un message caché,
   o de rechercher lesdites marques de synchronisation dans lesdites zones réduites,
   o de calculer une déformation de la photo
   o de transformer la photo à l'inverse de la déformation calculée.

**10.** Dispositif selon la revendication 9, dans lequel le dispositif de prise d'image comporte une caméra à CCD et un moyen d'éclairage.

**11.** Dispositif selon la revendication 9 ou 10, dans lequel le moyen de positionnement est un moyen de positionnement par taquets (21).

**12.** Dispositif selon l'une des revendications 9 à 11, dans lequel la carte (4) est une carte à puce et dans lequel le dispositif comporte une interface (73, 73') pour communiquer avec la puce (14) de ladite carte pour lire des informations dans ladite puce.

**13.** Dispositif selon l'une des revendications 9 à 11, dans lequel la carte est une carte à bande magnétique et dans lequel le dispositif comporte une interface (74) pour lire des informations sur ladite bande magnétique de ladite carte.

**14.** Dispositif selon l'une des revendications 9 à 11, dans lequel la carte comporte des informations marquées sur une zone de lecture optique et dans lequel le dispositif comporte un lecteur optique (75) pour lire les informations dans ladite zone de lecture optique de la carte.

**15.** Dispositif selon l'une des revendications 12 à 14, dans lequel les informations lues à partir de la carte sont une ou plusieurs des informations suivantes :

- positions théoriques des marques de synchronisation de la photo,
- formes des marques de synchronisation,
- identifiant permettant de retrouver dans un serveur les positions théoriques des marques de synchronisation,

- identifiant permettant de retrouver dans un serveur les formes des marques de synchronisation.

16. Dispositif selon l'une des revendications 9 à 15, dans lequel la carte avec photo est une carte d'accès personnalisée, une carte nationale d'identité, un passeport ou tout autre document permettant d'identifier de manière sûre une personne physique.

17. Carte (4) avec photo (10) destinée à identifier une personne de manière sûre, dans lequel :

- la photo (10) comporte un message caché et des marques de synchronisation permettant de retrouver le message caché,
- la carte (4) comporte au moins un autre support d'information (14) mémorisant une ou plusieurs des informations suivantes :

o positions théoriques des marques de synchronisation de la photo,
o formes des marques de synchronisation,
o identifiant permettant de retrouver dans un serveur les positions théoriques des marques de synchronisation,
o identifiant permettant de retrouver dans un serveur les formes des marques de synchronisation.

18. Carte selon la revendication 17, dans laquelle l'autre support d'information est un circuit intégré.

19. Carte selon la revendication 17, dans laquelle l'autre support d'information est une bande magnétique.

20. Carte selon la revendication 17, dans laquelle l'autre support d'information est une zone de lecture optique.

21. Carte selon l'une des revendications 17 à 20, dans laquelle les informations de l'autre support d'information sont cryptés.

22. Carte selon l'une des revendications 17 à 21, dans laquelle la photo est imprimée avec une précision de centrage inférieure au millimètre par rapport à un bord de la carte.

23. Carte selon l'une des revendications 17 à 22, laquelle carte est une carte d'accès personnalisée, une carte nationale d'identité, un passeport ou tout autre document permettant d'identifier de manière sûre une personne physique.

INFO

4

3

1

2

8

INFO

7

6

5

**Fig. 1**

4

11

12

14

10

**Fig. 2**

24  22  23  21

Fig. 3

20

27

Fig. 4a

25

28
28
28
28

Fig. 4b

26

Fig. 5

Fig. 6

**Fig. 7**

**Fig. 8**

**Fig. 9**

Office européen
des brevets

**RAPPORT DE RECHERCHE EUROPEENNE**

Numéro de la demande

EP 05 29 2811

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 01/43080 A (SUN MICROSYSTEMS INC; DE JONG, EDUARD, KAREL) 14 juin 2001 (2001-06-14) * le document en entier * | 1,7,9-23 | INV. H04N1/32 |
| X | US 2005/077351 A1 (DE JONG EDUARD KAREL) 14 avril 2005 (2005-04-14) * le document en entier * | 1,7,9-23 | |
| X | EP 1 400 371 A (KOWA CO., LTD) 24 mars 2004 (2004-03-24) * abrégé; revendication 13; figures 1,23 * * alinéas [0034], [0097] - [0106], [0127] * | 1,7,9-23 | |
| A | US 2003/231785 A1 (RHOADS GEOFFREY B ET AL) 18 décembre 2003 (2003-12-18) * abrégé; figure 12 * * alinéas [0159] - [0166] * | 1-9,15, 17,22 | |
| A | US 6 650 761 B1 (RODRIGUEZ TONY F ET AL) 18 novembre 2003 (2003-11-18) * colonne 5, ligne 23 - colonne 6, ligne 35 * | 1-9,15, 17,22 | DOMAINES TECHNIQUES RECHERCHES (IPC) |
| A | EP 0 981 113 A (DIGIMARC CORPORATION) 23 février 2000 (2000-02-23) * abrégé; revendications 1,19 * * alinéas [0050] - [0053] * | | H04N G06T G07D B42D |
| A | WO 2004/035321 A (DIGIMARC CORPORATION; BRUNDAGE, TRENT, J; SHER-JAN, MAHMOOD; WEAVER, M) 29 avril 2004 (2004-04-29) * abrégé; revendications 58-72 * * alinéas [0029], [0046], [0135] - [0184] * | | |

-/--

Le présent rapport a été établi pour toutes les revendications

| Lieu de la recherche | Date d'achèvement de la recherche | Examinateur |
|---|---|---|
| La Haye | 7 juin 2006 | Brans, T |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
 
& : membre de la même famille, document correspondant

EPO FORM 1503 03.82 (P04C02)

**Office européen
des brevets**

**RAPPORT DE RECHERCHE EUROPEENNE**

Numéro de la demande

EP 05 29 2811

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | PATENT ABSTRACTS OF JAPAN vol. 2000, no. 20, 10 juillet 2001 (2001-07-10) & JP 2001 086319 A (TOSHIBA CORP), 30 mars 2001 (2001-03-30) * abrégé * ----- | | |
| A | PATENT ABSTRACTS OF JAPAN vol. 2003, no. 12, 5 décembre 2003 (2003-12-05) & JP 2005 293399 A (MATSUSHITA ELECTRIC IND CO LTD), 20 octobre 2005 (2005-10-20) * abrégé * ----- | | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 7 juin 2006 | Brans, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................................................
& : membre de la même famille, document correspondant

EPO FORM 1503 03.82 (P04C02)

**EP 1 802 093 A1**

## ANNEXE AU RAPPORT DE RECHERCHE EUROPEENNE
## RELATIF A LA DEMANDE DE BREVET EUROPEEN NO.

EP 05 29 2811

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-06-2006

| Document brevet cité au rapport de recherche | | Date de publication | Membre(s) de la famille de brevet(s) | | Date de publication |
|---|---|---|---|---|---|
| WO 0143080 | A | 14-06-2001 | AU | 777437 B2 | 14-10-2004 |
| | | | AU | 1586700 A | 18-06-2001 |
| | | | BR | 9917573 A | 06-08-2002 |
| | | | CA | 2393642 A1 | 14-06-2001 |
| | | | CN | 1398385 A | 19-02-2003 |
| | | | EP | 1236181 A1 | 04-09-2002 |
| | | | JP | 2003516572 T | 13-05-2003 |
| | | | US | 6883716 B1 | 26-04-2005 |
| US 2005077351 | A1 | 14-04-2005 | AUCUN | | |
| EP 1400371 | A | 24-03-2004 | CN | 1484196 A | 24-03-2004 |
| | | | JP | 2004112223 A | 08-04-2004 |
| | | | US | 2004050931 A1 | 18-03-2004 |
| US 2003231785 | A1 | 18-12-2003 | AUCUN | | |
| US 6650761 | B1 | 18-11-2003 | AUCUN | | |
| EP 0981113 | A | 23-02-2000 | AT | 304727 T | 15-09-2005 |
| | | | AU | 4836799 A | 21-02-2000 |
| | | | CA | 2338618 A1 | 10-02-2000 |
| | | | CN | 1631030 A | 22-06-2005 |
| | | | DE | 69927218 D1 | 20-10-2005 |
| | | | DE | 69927218 T2 | 12-01-2006 |
| | | | EP | 1444823 A2 | 11-08-2004 |
| | | | JP | 2003524911 T | 19-08-2003 |
| | | | WO | 0007356 A2 | 10-02-2000 |
| | | | US | 6724912 B1 | 20-04-2004 |
| | | | ZA | 200100615 A | 07-02-2003 |
| WO 2004035321 | A | 29-04-2004 | AU | 2003285891 A1 | 04-05-2004 |
| | | | CA | 2502232 A1 | 29-04-2004 |
| | | | EP | 1551644 A1 | 13-07-2005 |
| | | | MX | PA05003984 A | 22-06-2005 |
| JP 2001086319 | A | 30-03-2001 | AUCUN | | |
| JP 2005293399 | A | 20-10-2005 | AUCUN | | |

Pour tout renseignement concernant cette annexe : voir Journal Officiel de l'Office européen des brevets, No.12/82

20